# EUROPEAN PATENT SPECIFICATION

(11) **EP 1 191 085 B1**
(45) Date of publication and mention of the grant of the patent: **27.07.2005**
(21) Application number: 01203174.6
(22) Date of filing: 20.02.1997
(51) Int. Cl.: C10L 1/32, B08B 3/04, C23G 1/24, B08B 9/093

(54) **Method for fluidizing tars**
Verfahren zum Verflüssigen von Teeren
Méthode de fluidification de goudrons

(30) Priority: 20.02.1996 US 11977 P; 20.02.1997 US 802742
(43) Date of publication of application: 27.03.2002
(62) Divisional of application: 97936007.0
(73) Proprietor: RHODIA INC., Cranbury, New Jersey 08512 (US); RHODIA CHIMIE, 92408 Courbevoie Cédex (FR)
(72) Inventor: Hill, Dean Philip, Baton Rouge, Lousiana 70817 (US); Guerin, Gilles, 95600 Eaubonne (FR); Pruitt, Thomas Edwin, Deer Park, TX 77536 (US); Sanders, Forest Lee, Katy, Texas 77450 (US); Langlois, Bruno, 91700 Sainte Geneviève des Bois (FR)
(74) Representative: Kyle, Diana

(56) References cited:
- US-A- 5 085 710
- DATABASE WPI Section Ch, Week 8627 Derwent Publications Ltd., London, GB; Class E19, AN 86-175744 XP002047670 & SU 1 198 099 A (KHARKOV POLY)

## Description

The present invention relates to methods for fluidizing tars and sludges. Specifically, the invention relates to processes for cleaning tars, such as spent acid tars, from reaction vessels, process equipment, transportation containers and storage tanks utilizing sulfuric acid, surfactants and optionally a carrier.

Undesirable , products/by products are formed in several chemical reaction processes. In many cases these undesirable products tend to separate in storage containers, reactors and other process equipment as highly viscous, sticky or sometimes solid matter of unknown chemical composition. These are typically referred to by those skilled in the art as tars or sludges. Their physical nature often times makes them difficult to remove from the containers/vessels where they occur (reactors, storage tanks, transportation containers, pipes or the like) by normal material handling processes such as pumping. Build up over time subtracts from the liquid load carrying or storage capacity of the containers/vessels. Tars can be formed either during a chemical reaction process, a physical process such as distillation or during storage and/or transportation. The tars can be classified as organic, acidic etc. based on the physical and chemical characteristics they exhibit. Many organic substances, other than those having a simple structure and a low boiling point, result after pyrolysis, that is to say heating in the absence of air, in very viscous liquids known as tars.

Large amounts of tar residues are thus produced by industrial processes. These tars can thus consist of residues resulting from the destructive distillation of organic matter. The distillation of crude oil produces tar residues known as bitumens or alternatively asphalts. These bitumens are generally mixtures of hydrocarbons of high molecular mass (in particular from 500 to 3000), most often of asphaltenes (which can represent up to 25% by weight of the tar), and of organic substances which are very rich in carbon and in hydrogen but which can also contain oxygen, sulfur or nitrogen, as well as traces of metal elements, in particular nickel and vanadium. Mention may be made, as examples, of the viscous tar residues resulting from the synthesis of white oils from petroleum fractions. These viscous tars can contain an acid, in particular sulfuric acid.

These tars constitute waste which, because of its very high viscosity, is impossible or extremely difficult to pump and to spray and cannot be easily and inexpensively incinerated; this is highly disadvantageous, in particular when it is desired to recover the waste acids which it may contain. The tars must thus be handled like solids Their incineration in a rotary furnace is a substantial cost and can potentially contribute to air pollution.

The present invention provides a process for treating these tars which makes it possible to remove the above-mentioned disadvantages. One process of the present invention makes it possible to condition these residues in a fluid form which can be diluted with water or with acid, in highly varied proportions, and which is stable on storage.

Sulfuric acid is used in reactions such as sulfonations, nitration, or as a catalyst such as in alkylation in the petroleum refinery operations or for other uses such as drying, pickling etc. At the end of these processes, the sulfuric acid remains in a form which is not usable and has to be recovered or disposed. This sulfuric acid is commonly referred to as spent acid or spent sulfuric acid. The spent acid can be processed to recover usable sulfuric acid by a number of processes including the process of regeneration.

It is common practice to store the spent acid in storage tanks prior to recovery of the sulfuric acid either at site or transport them off-site for recovery or disposal. Common transportation modes are tank trucks, rail cars, barges and pipelines.

Tars have been found to be present in some spent acids. When spent acid is associated with tars, they pose operational problems in material handling and recovery during storage and transportation. When tars are formed in reactors and process equipment, such as heat exchangers, they reduce the operational capability of the process and the equipment. The tars are a heavy, viscous material which tend to stick to the containers, and in some instances, over a period of time increase in viscosity and react to form solid deposits in the containers. Removal of such tars by normal pumping techniques from storage tanks, reactors or pressure transfer from tank trucks and rail cars, is difficult due to the high viscosity and in some cases the solid nature of the material.

In industrial practice, it is common to remove such tars by physical means such as cutting and opening a passage into the container followed by physical removal or by a vacuum technique. A highly viscous tar is not transportable with ordinary small diameter 10.2-12.7cm (four or five inch) lines using standard available vacuum trucks, most of which are usually capable of creating a vacuum of about 68.6-71.2cm (twenty seven to twenty eight inches) of water column. Where masses of material cannot be suctioned, personnel are required to manually enter and remove the material.

Having to place personnel in intimate physical contact with the tar/sludge can result in significant health, safety and environmental issues. When the tar is laden with volatile or hazardous materials personnel safety and protective equipment can significantly slow the removal process. Often all of the tar/sludge can not be removed and the problem of disposal or transportation remains.

A process of the present invention is advantageous in that it does not involve any physical alteration to the tank to remove the tar/sludge. Instead, it involves treating the tar with sulfuric acid and a surfactant to allow blending of the tar/sludge with the sulfuric acid. The process provides a safer alternative to the existing methods of cleaning, especially tank cleaning, in that it does not involve any confined space entry or otherwise exposing individuals to potential safety hazards. Another advantage of the process is the ability to recover the tar/sludge in a form which can be easily transported, handled and pumped. Further, it is rendered in a condition for recovery of saleable sulfuric acid by the regeneration process.

European Patent No. 0882110 describes and claims a process for the preparation of an aqueous tar suspoemulsion, characterized in that a mixture (M) comprising:
- a viscous tar composition formed (i) from at least one tar generally exhibiting a viscosity at least equal to about 3 Pa·s, preferably at least equal to about 30 Pa·s. (ii) from inorganic solids and, optionally, (iii) from water,
- water (W),
- at least one surface-active agent (SA) exhibiting an HLB (hydrophilicity/lipophilicity balance) of at least about 10, for example of at least about 12, and, optionally, at least one thickening water-soluble polymer (TWP) with a molecular mass greater than about 10,000, generally greater than about 100,000,
is mixed, the relative amounts of constituents (W), (SA) and, optionally, (TWP) being such that the viscosity of the (W) + (SA) + optional (TWP) mixture is equal to or greater than about one tenth of the viscosity of said tar, preferably equal to or greater than the viscosity of said tar,
and in that the mixture obtained is optionally diluted with water or with at least one aqueous acidic solution.
Preferably, the process comprises the additional step of incineration of the sludge and regeneration of the sulphuric acid.

The present invention relates to a method for fluidizing acidic tars/sludges comprising contact with sulfuric acid and a surfactant. Optionally, a carrier for the surfactant's incorporation into the tar/sludge can be utilized. This provides an effective process for cleaning sulfuric acid tars/sludges from containers/vessels such as transportation containers, pipes and storage tanks.

Thus, the present invention provides a process for fluidizing tars/sludges or cleaning tars/sludges from containers/vessels such as transportation containers, reactors, pipes and storage containers comprising contacting the tar/sludge with an inorganic acid and a surfactant having an HLB of at least 10 by the step of
(i) adding the acid and surfactant to the container/vessel containing the tar/sludge;
(ii) or optionally when the tar/sludge has an acid strength of greater than 20%, adding the surfactant without additional acid.

Unless otherwise stated, all parts or percents are parts or percents respectively by weight.

Viscosity is understood to mean, in the present account, the dynamic viscosity measured at 25°C using a Brookfield viscometer according to AFNOR standard NFT 76-102 of February 1972.

The term suspoemulsion is employed here to denote an emulsion containing inorganic solids or particles.

"Comprising," as used herein, means various components can be conjointly employed. Accordingly, the terms "consisting essentially of" and "consisting of" are embodied in the term comprising.

The viscous tar composition can generally contain:
from 2 to 70%, preferably from 5 to 30%, for example
from 10 to 25%, by weight of tar;
from 5 to 50%, preferably from 10 to 45%, for example
from 25 to 40%, by weight of
inorganic solids;
from 0 to 70%, preferably from 5 to 65%, for example from 30 to 65%, by weight of water.

The viscous tar composition thus preferentially contains water. The tar + inorganic solids combination forms a water-immiscible phase. These inorganic solids generally result from the synthesis of the tar.

Mention may be made, as examples of inorganic solids present in the viscous tar composition to be emulsified, of in particular diatomaceous earths, silica powders, quartz, sand, sand-gravel mix, calcium carbonate, mica, talc, sulfur or traces of metal elements; the particle size of these inorganic solids is generally from approximately 0.001 to 300 µm.

As previously mentioned, tars/sludges originate from different sources. Acid tars/sludges are formed in reactions which use sulfuric acid, oleum (fuming sulfuric acid) and sulfurtrioxide (SO3) as reactant, medium or catalyst. A typical process using sulfuric acid, oleum or sulfurtrioxide as a reactant is the sulfonation reaction where these react with organic compounds resulting in sulfonic acids. There are several instances of organic sulfonic acids in chemistry and industrial practice. In many cases, excess sulfuric acid is used for the sulfonation in order to fully utilize the organic compound being sulfonated and the sulfuric acid also acts as a solvent and reaction medium during the sulfonation process. After the desired product, namely, the sulfonic acid has been recovered, the process has to deal with the handling and disposal of the spent acid. Both during the sulfonation process and thereafter during storage of the spent acid, tars/sludges are formed.

Another source of tar/sludge would be a reaction where sulfuric acid is not the primary reactant but acts as a medium for the reaction. A typical example of such a reaction would be a nitration reaction where nitric acid is the primary reactant and sulfuric acid is necessary to promote the reaction of the organic compound with the nitric acid. Nitrations are typically done with what is called a nitrating acid which is a mixture of nitric acid and sulfuric acid. Here again, as in sulfonation, both during the nitration and after the nitro compound has been isolated, the spent acid which contains sulfuric acid and other impurities has to be recovered. This is another source for tar/sludge.

In the process of manufacture of high grade gasoline, sulfuric acid is used as a catalyst in the reaction called alkylation. The alkylation process involves the reaction of "light" olefins containing 3,4 and/or 5 carbon atoms with isobutane in the presence of an acid catalyst. Typically, the olefins are propylene, 2-butene and 2-methyl butene and the predominant products are a mixture of 2,4 Dimethylpentane, 2,2,4 Trimethylpentane and 2,2,5 Trimethylpentane. There are competing side-reactions which result in polymerizations. After the recovery of the gasoline, the spent acid (commonly known as "alky spent" to designate the origin of the spent acid) is transferred to storage tanks and then transported for sulfuric acid regeneration. Tars are known to form during the alkylation reaction and tend to accumulate in the storage tanks and transportation containers.

The sulfuric acid present in the tars and sludges from the above processes typically ranges from 15% to 90%, preferably from 20% to 80% in strength. Typically the tar/sludge can contain sulfuric acid in the range of 20% to 80%, water from 10% to 35% a carrier such as diesel, xylene or other organic chemicals in the range of from about 1% to about 30% and carbonaceous matter commonly referred to as tar in the range of 10% to 55%. The tars/sludges can have a viscosity of from 2 to greater than 10 Pa·s (2000 to greater than 10000 centipoise).

The first component of the present invention is an inorganic acid. The inorganic acid employed in this invention is a strong acid, such as sulfuric acid (H₂SO₄). Sulfuric acid suitable for use is any commercially available sulfuric acid. Typically, this can be any of the commercially available concentrations - 77.7%, 93.2%, 99%, 100%, 104.5%, 109% and 114.6%. The last three concentrations are also referred to in commerce as 20%, 40% and 65% Oleum. The strength of the acid utilized can vary depending on the type of tar to be treated. Strengths below 77.7% can be utilized, such as ranging below 76% or below 70% or less. Generally, the preferred strength for use herein is the 93% sulfuric acid. Phosphoric acid can be utilized in the place of sulfuric acid. Mixtures of sulfinic and phosphoric can also be utilized.

The second component of the invention is the surface-active agent, otherwise referred to herein as "surfactant." Suitable surfactants for use are nonionic surfactants, cationic surfactants, amphoteric (including zwitterionics) surfactants, anionic surfactants and mixtures thereof. Preferred surfactants for use are nonionic surfactants, cationic surfactants, anionic surfactants and mixtures thereof. Amphoterics are not preferred for use with acidic tars/sludges, particularly spent sulfuric acid tars/sludges. Preferably, the surfactant is compatible with the acid environment and more preferably also stable in non-acid environments. Preferably, compatibility is determined by the absence of any reaction between the surfactant and the acid and tar system and also by the stability of the fluidized tar resulting from the use of the surfactant system. Some degree of reaction can be acceptable and it is within the skill of an artisan to determine the compatibility.

Preferred surfactants useful herein include: mixed octyl/decyl alcohols which are ethoxylated and propoxylated, nonylphenoxypoly(ethyleneoxy)ethanol, polyethoxylated tallow amine, isopropylaminealkylarylsulfonate, dinonylphenoxypoly(ethyleneoxy)-ethanol, mixtures of ethoxylated and propoxylated tallow amine and mixtures thereof. Amphoteric surfactants which can be utilized include: sodiumlauriminodipropionate, cocamidopropylbetaine, cocoamphohydroxypropyl sulfonate and mixtures thereof. Based on the composition of the tars, selection of the appropriate surfactant is made and experimentally tested for the stability (gelling, heat evolution and reaction with the tar components) of the mix of the tar with the acid system.

Surfactants having an HLB of at least 10 or their mixtures are preferred for use. Ionic surfactants with an HLB greater than 20 are also preferred.

Examples of useful nonionic surfactants include condensates of ethylene oxide with a hydrophobic moiety which has an average hydrophilic lipophilic balance (HLB) between 8 to 16, and more preferably, between 10 and 12.5. These surfactants include the condensation products of primary or secondary aliphatic alcohols having from 8 to 24 carbon atoms, in either straight or branched chain configuration, with from 2 to 40, and preferably between 2 and 9 moles of ethylene oxide per mole of alcohol.

In a preferred embodiment the aliphatic alcohol comprises between 9 and 18 carbon atoms and is ethoxylated with between 3 and 12 moles of ethylene oxide per mole of aliphatic alcohol.

Preferred nonionic surfactants exhibiting an HLB of at least 10 can be chosen, for example, from alkoxylated fatty acids, polyalkoxylated alkylphenols, polyalkoxylated fatty alcohols, polyalkoxylated or polyglycerolated fatty amides, polyglycerolated alcohols and x-diols or ethylene oxide/propylene oxide block copolymers, as well as alkylglucosides, alkylpolyglucosides, sucroethers, sucroesters, sucroglycerides or sorbitan esters.

Other suitable nonionic surfactants include the condensation products of 6 to 12 carbon atom alkyl phenols with 3 to 30, and preferably between 4 and 14 moles of ethylene oxide. Examples of such surfactants are sold under the trade names Igepal CO 430, Igepal CO 530, Igepal CO 630, Igepal CO 720 and Igepal CO 730 by Rhone-Poulenc Inc. Still other suitable nonionic surfactants are described in U.S. Patent No. 3,976,586.

Other suitable nonionic surfactant for use herein are sold under the trade names Antarox TA 4400 and Antarox BL 240 by Rhone-Poulenc Inc.

Cationic surfactants suitable for use include the quaternary compounds imidazolines, dialkyl quats and benzyl quats as well as the amine oxides, fatty imidazolines and ethoxylated amines.

Cationic surfactants suitable for use are ethoxylated tallow amines disclosed in U.S. Patent No. 5,409,574, issued April 25, 1995, to Razac et al.

The propoxylated fatty amine ethoxylate surfactants used in the invention can be represented by the general average formula: 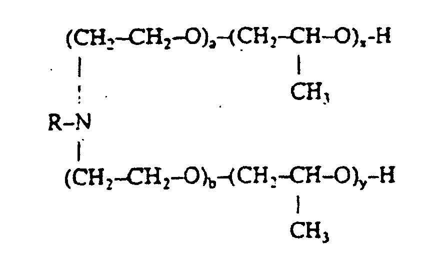 where R suitably represents hydrocarbon groups containing an average value of between 1-30 carbon atoms, and wherein a plus b represent from 0 to 50 moles ethylene oxide (EO), and x and y represent from 0 to 20 moles propylene oxide (PO), the sum of a, b, x. and y being at least 2. and preferably from 6 to 22, it being understood that a, b, x, and y represent average numerical values and that the formula is an average representation, the various groups being disposed independently in each amine substituent chain, e.g., EO-PO-EO, EO-EO-PO, EO-EO=EO, PO-PO-PO. EO-PO-PO, PO-EO-PO and the like.

The hydrocarbon groups can be aliphatic or aromatic, and, if aliphatic, can be linear, branched or cyclic in nature, and can be the same or different particularly in the case of fatty radicals which are a composite of various chain length materials. The aliphatic hydrocarbon radical can contain ethylenic urtsaturation. Preferably the aliphatic groups are selected from among alkyl groups, and substituted alkyl groups thereof, such as long chain alkyl groups, preferably having from 6 to 30, preferably 6 to 22, carbon atoms, such as stearyl, lauryl, oleyl, cetyl, tridecyl, tetradecyl, hexadecyl, dodecyl, octadecyl, nonadecyl, tallow, coco, soya, myristyl and other natural fatty radicals from animal, fish, vegetable and oil seed sources (coconut oil, palm kernel oil, babassu oil, rape seed oil, sunflower seed oil and the like) or substituted groups thereof, derived from natural or synthetic sources. These compounds can be illustrated by cocamine ethoxylate propoxylate, laurylamine ethoxylate propoxylate, tallowamine ethoxylate propoxylate, oleylamine ethoxylate propoxylate, stearylamine ethoxylate propoxylate, myristylamine ethoxylate propoxylate, cetylamine ethoxylate propoxylate and the like.

Preferred cationic surfactants with an HLB at least equal to 10 can be chosen from alipatic or aromatic fatty amines, aliphatic fatty amides or quaternary ammonium derivatives.

Commercially available cationic surfactants for use are RHODAMEEN® PN 430, RHODAMEEN® VP-532/SPB and RHODAMEEN® ethoxylated fatty amines. ALKAQUAT® and RHODAQUAT® cationic quaternaries, RHODAMOX® amine oxides, and MIRAMINE® cationic imidazolines and fatty amine condensates sold by Rhone-Poulenc Inc., Cranbury, New Jersey.

Examples of suitable amphoteric surfactants include the alkali metal, alkaline earth metal, ammonium or substituted ammonium salts of alkyl amphocarboxy glycinates and alkyl amphocarboxypropionates, alkyl amphodipropionates, alkyl amphodiacetates, alkyl amphoglycinates and alkyl amphopropionates wherein alkyl represents an alkyl group having 6 to 20 carbon atoms. Other suitable amphoteric surfactants include alkyl iminopropionates, alkyl iminodipropionates and alkyl amphopropylsulfonates having between 12 and 18 carbon atoms; alkyl betaines and amidopropyl betaines and alkyl sultaines and alkylamidopropylhydroxy sultaines wherein alkyl represents an alkyl group having 6 to 20 carbon atoms.

Particularly useful amphoteric surfactants include both mono and dicarboxylates such as those of the formulae: 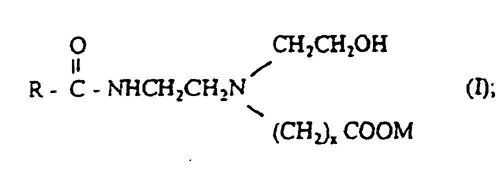 and 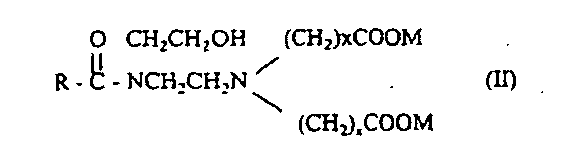 wherein R is an alkyl group of 6-20 carbon atoms, x is 1 or 2 and M is hydrogen or sodium. Mixtures of the above structures are particularly preferred.

Other formulae for the above amphoteric surfactants include the following:
Alkyl betaines 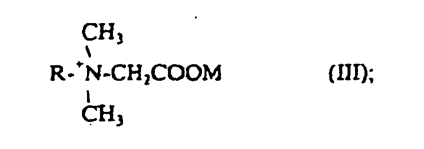
Amidopropyl betaines 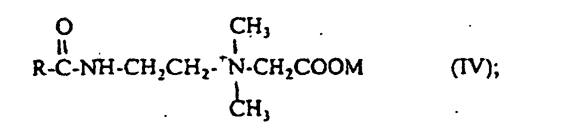
Alkyl sultaines 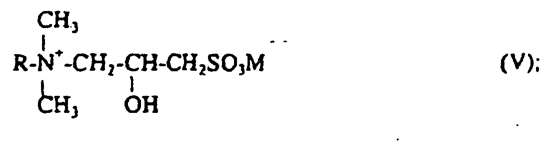 and
Alkyl amidopropylhydroxy sultaines 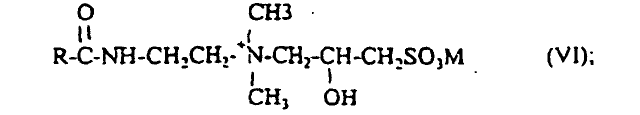
where R is a alkyl group of 6-20 carbon atoms and M is potassium, sodium or a monovalent cation.

Of the above amphoteric surfactants, particularly preferred are the alkali salts of alkyl amphocarboxyglycinates and alkyl amphocarboxypropionates, alkyl amphadiproplonates, alkyl amphodiacetates, alkyl amphoglycinates, alkyl amphopropyl sulfonates and alkyl amphopropionates wherein alkyl represents an alkyl group having 6 to 20 carbon atoms. Even more preferred are compounds wherein the alkyl group is derived from coconut oil or is a lauryl group, for example cocoamphodipropionate. Such cocoamphodipropionate surfactants are commercially sold under the trademarks MIRANOL C2M-SF CONC. and MIRANOL FBS by Rhone-Poulenc Inc.
Other commercially useful amphoteric surfactants include:
cocoamphoacetate (sold under the trademarks MIRANOL ULTRA C-32 and MIRAPON FA),
cocoamphopropionate (sold under the trademarks MIRANOL CMSF CONC. and MIRAPON FAS),
cocoamphodiacetate (sold under the trademarks MIRANOL C2M CONC. and MIRAPON FB),
lauroamphoacetate (sold under the trademarks MIRANOL HM CONC. and MIRAPON LA),
lauroamphodiacetate (sold under the trademarks MIRANOL H2M CONC. and MIRAPON LB),
lauroamphodipropionate (sold under the trademarks MIRANOL H2M-SF CONC. AND MIRAPON LBS),
lauroamphodiacetate obtained from a mixture of lauric and myristic acids (sold under the trademark MIRANOL BM CONC.), and
cocoamphopropyl sulfonate (sold under the trademark MIRANOL CS CONC.) caproamphodiacetate (sold under the trademark MIRANOL S2M CONC.), caproamphoacetate (sold under the trademark MIRANOL SM CONC.), caproamphodipropionate(sold under the trademark MIRANOL S2M-SF CONC.), and
stearoamphoacetate (sold under the trademark MIRANOL DM).

Also useful herein are the betaines and amidobetaines which are compounds of the general structure: 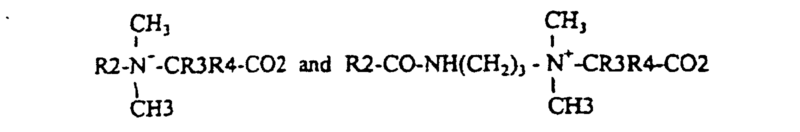 respectively wherein R2 is C8 - C22 alkyl or alkenyl; R3 is H or C1 - C4 alkyl; and R4 is H or C1 - C-4 alkyl.

The betaines useful herein include the high alkyl betaines such as cocodimethyl carboxymethyl betaine, lauryl dimethyl carboxymethyl betaine, lauryl dimethyl alpha-carboxy-ethyl betaine, cetyl dimethyl carboxymethyl betaine, lauryl bis-(2-hydroxyethyl)carboxy methyl betaine, stearyl bis-(2-hydroxy-propyl)carboxymethyl betaine, oleyl dimethyl gamma-carboxypropyl betaine, and lauryl bis-(2-hydroxypropyl)alphacarboxyethyl betaine. The sulfobetaines are also preferred and may be represented by cocodimethyl sulfopropyl betaine, stearyldimethyl sulfopropyl betaine, lauryl dimethyl sulfoethyl betaine, lauryl bis-(2-hydroxy-ethyl)sulfopropyl betaine and mixtures thereof. A particularly preferred composition utilizes cocoamidopropyl betaine.

Preferred amphoteric (including zwitterionic) surfactants with an HLB of at least 10 can be chosen from betaines and their derivatives, sultaines and their derivatives, lecithins, imidazoline derivatives, glycinates and their derivatives, amidopropionates or fatty amine oxides.

Useful anionic surfactants include any of the known hydrophobes attached to a carboxylate, sulfonate, sulfate or phosphate polar, solubilizing group including salts. Salts may be the sodium, potassium, calcium, magnesium, barium, iron, ammonium and amine salts of such surfactants.

Examples of such anionic surfactants include water soluble salts of alkyl benzene sulfonates having between 8 and 22 carbon atoms in the alkyl group, alkyl ether sulfates having between 8 and 22 carbon atoms in the alkyl group, alkali metal, ammonium and alkanolammonium salts or organic sulfuric reaction products having in their molecular structure an alkyl, or alkaryl group containing from 8 to 22 carbon atoms and a sulfonic or sulfuric acid ester goup.

Preferred anionic surfactants with an HLB of at least 10 can be chosen from alkali metal alkylbenzenesulphonates, alkyl sulphates, alkyl ether sulphates, alkylaryl ether sulphates, dialkyl sulphosuccinates, alkyl phosphates or ether phosphates.

Particularly preferred are linear sodium and potassium alkyl ether sulfates that are synthesized by sulfating a higher alcohol having between 8 and 18 carbon atoms and having 2 to 9 moles of ethylene oxide. Another anionic surfactant is alkyl benzene sulfonate, in which the alkyl group contains between 9 to 15, and preferably, between 11 to 13 carbon atoms in a straight chain or branched chain configuration and most preferably a linear straight chain having an average alkyl group of about 11 carbon atoms.

Mixtures of anionic surfactants can be utilized, including mixtures of alkyl or alkylaryl sulfonate and sulfate surfactants. Such embodiments comprise a mixture of alkali metal salts, preferably sodium salts, of alkyl benzene sulfonates having from 9 to 15, and more preferred between 11 and 13 carbon atoms with an alkali metal salt, preferably sodium, of an alkyl sulfate or alkyl ethoxy sulfate having 10 to 20 and preferably 12 to 18 carbon atoms and an average ethoxylation of 2 to 4.

Anionic surfactants which may be selected include linear alkyl benzene sulfonates such as dodecylbenzene sulfonate, decylbenzene sulfonate, undecylbenzene sulfonate, tridecylbenzene sulfonate, nonylbenzene sulfonate and the sodium, potassium, ammonium, triethanolammonium and isopropylammonium salts thereof A preferred anionic surfactant is a linear isopropylamine dodecylbenzene sulfonate; one of which is sold under the tradename Rhodacal® IPAM by Rhône-Poulenc Inc.. A suitable sulfonate salt is sodium dodecylbenzene sulfonate. Such chemicals are sold under the trade name Biosoft 100 by Stepan Chemicals of Northfield, Illinois. Other anionic surfactants include polyethoxylated alcohol sulfates, such as those sold under the trade name Neodol 25-3S by Shell Chemical Company. Examples of other anionic surfactants are provided in U.S. Patent No. 3,976,586.

An optional component is a carrier for the introduction of the surfactant into the tar/sludge. The carrier can be aqueous or organic and is preferably selected from the group consisting of water, diesel, xylene, methyl isobutyl ketone, isopropyl alcohol, an inorganic acid (e.g., sulfuric acid) and dimethylsulfoxide. It is used for ease of introduction of the surfactant, to provide stability to the mix and result in effective clean-out of the tar/sludges from the containers. Preferred carriers are water, diesel xylene and mixtures thereof and most preferred is diesel.

Another optional component is a suspending agent such as guar gum, a polysaccharide blend or other similar acting polymer can be utilized. A preferred guar is sold under the tradename Jaguar® by Rhône-Poulenc Inc.

The process of the present invention can comprise the addition of the acid and surfactant into the container/vessel containing the tar/sludge. Preferably, the surfactant and acid are premixed prior to introduction to the container/vessel. Another method of addition is to introduce the surfactant premixed with a carrier and introduce the acid separately. When the tar/sludge to be fluidized has an acid strength of greater than 20%, preferably greater than 30%, more preferably greater than 40% and most preferably greater than 50%, there can be sufficient acid present such that additional acid need not be added and the surfactant with the acid present in the tar will act sufficiently to fluidize the tar/sludge and clean the container/vessel. To fluidize the tar/sludge is to provide a pumpable/flowable mixture.

Mechanical agitation and or external recirculation can be utilized. However, mechanical agitation and or external recirculation are not necessary. The surfactant, acid and tar/sludge can be contacted and allowed to remain in contact for a sufficient amount of time to achieve fluidization.

The second embodiment/process of the present invention is applicable to acidic tars/sludges and to nonacidic tars/sludges. It is preferred for use with acidic tars/sludges. Surprisingly, the method of the present invention cleans the containers vessels until substantially free of tar/sludge, i.e., preferably 90% free, more preferably 95% free and most preferably 100% free of tar sludge material.

Blending the surfactant with the acid, preferably sulfuric acid, is preferably done within the approximate temperature range of from 16°C (60°F) to 66°C (150°F) and more preferably within the approximate range of from 24°C (75°F) to 38°C (100°F). Excessively high temperatures are not employed since they can result in charring and the formation of solid carbonaceous matter. The highest recommended temperature by the invention without any significant charring is 66°C (150°F).

A process of the present invention for cleaning storage tanks and transportation containers until substantially free of the sludge and tars comprises contacting the tar/sludge with sulfuric acid of 75% to 98% concentration at a temperature of from 16°C (60°F) to 66°C (150°F); introducing a surfactant into the tar/sludge/sulfuric acid mix at concentrations ranging from 0.2% to 7.5% by weight of the final blend and optionally contacting the tar /sludge with diesel, xylene, water or other carrier. Further, the present invention relates to a process in which the contacting is done by mechanical agitation and or external recirculation in a tank, or introduction of the acid-surfactant mix in the suction side of a pump and recirculating through the tank/transportation containers via nozzles or openings at the top or sides of the tank/transportation containers.

The following examples are provided to better describe and define the present invention without, however limiting the scope thereof. They are for illustrative purposes only, and it is realized that changes and variations may be made that are not shown below.

### EXAMPLE 1

In this example tar is cleaned out from a rail car which is full of tar. Removing the tar manually by cutting an access is deemed too costly and the other option would be to dispose of the car in a land vault. The spent acid tar cited in this example results from a plant which manufactures a specialty chemical and uses sulfuric acid in the sulfonation process. The process also uses xylene among other organic species. After the process, the spent acid is transferred to a rail car for transportation to a sulfuric acid recovery facility. The rail car is examined and three layers of material are discovered in the rail car. The tar is distributed between the three layers. Laboratory evaluation of the rail car contents reveals a flammable top layer comprising xylene and considerable difficulty in handling of the tar layer which is the predominant layer. Based on this evaluation, the rail car is cleaned as follows: A batch process is utilized. Two strengths of sulfuric acid are utilized. Commercially available sulfuric acid of 93% strength is used for blending with the tar and commercially available sulfuric acid of 78% is used to flush the transfer line. RHODACAL IPAM a commercially available anionic surfactant (supplied by Rhone-Poulenc Inc., Cranbury, New Jersey) is used for blending with the tar. About 66 parts of 93% sulfuric acid is charged into a batch mix tank equipped with an agitator. This is followed by the introduction of about 0.8 parts of RHODACAL IPAM (a linear isopropylamine dodecylbenzene sulfonate). About 100 parts of tar containing layer is then transferred from the rail car under a nitrogen pressure of about 344.7 kPa (50 psig) into the mix tank containing the 93% sulfuric acid and the surfactant. After the transfer, the rail car is rinsed with about 35 parts of 78% sulfuric acid and the rinse is also transferred under nitrogen pressure to the mix tank. This flushes the transfer lines. The tank contents are agitated for about one hour. Then, the tank contents are transferred into a rail car for transportation to a facility for sulfuric acid recovery. The resulting fluidized spent acid is stable and tar does not separate during subsequent transportation. The rail car is rendered completely cleaned.

### EXAMPLE 2

In the method cited in this example, tar is cleaned out of a 94,625 ℓ 25,000 gal (4.27 m (14 feet) wide, 6.71m) (22 feet) tall) storage tank which is used to store spent sulfuric acid from an alcohol process in a chemical manufacturing facility. The process at this facility produces some tar during the manufacturing operation. This tar is carried over with the spent acid and accumulates in the storage tank. Over a period extending over about 18 months, the tar accumulates to a point where the tank is rendered unusable. The method of this invention is used for the purposes of cleaning the tank and inspecting the tank since tank inspections would not be meaningful in view of the tar coated surface. The tar in the tank is sampled and analyzed. The tank contains 37% sulfuric acid, 20% water and the remainder is carbonaceous matter of unknown composition. The viscosity is in excess of 10 Pa·s (10,000 centipoise) as tested by Brookfield viscometer. The free standing acid in the tank is pumped out of the tank leaving unpumpable tar in the tank along with small quantities of free standing acid. Adding additional sulfuric acid is not necessary in view of the origin of the tar and the fact that the tar contains 37% sulfuric acid. Diesel is utilized as a carrier to facilitate the mixing of the tar with the surfactant. Accordingly about 5 parts of diesel are mixed with about 1 part of Dinonylphenoxy(ethyleneoxy)ethanol surfactant (commercially available as IGEPAL CO 630 supplied by Rhone-Poulenc Inc.) in a mix tank. The diesel-surfactant mix is introduced into the side of the tank by a recirculation pump. The quantities utilized result in about 94 parts of the tar being treated with 5 parts of diesel and 1 part of surfactant. The liquid from the tank is recirculated into the tank. This recirculation process is continued until the viscosity is below 0.8 Pa·s (800 centipoise). The tank contents are then transferred to tank trucks. Inspection of the tank reveals complete removal of the tar.

### EXAMPLE 3

In the method described in this example, tar from a similar alcohol process as described in Example 2 is removed from a rail car. In this example, the tar clean-out is accomplished without mechanical agitation or external recirculation. The clean-out is achieved by allowing the tar to stand with a surfactant carrier mix. There is a significant tar layer floating on the top of spent acid. Initially, the free acid from the rail car is transferred under air pressure. To about 2839 ℓ (750 gallons) of diesel, about three 208 ℓ (55 gallon) drums containing Polyethoxylated Tallowamine surfactant (commercially available as RHODAMEEN PN 430 supplied by Rhône-Poulenc Inc.) are added and mixed. Half the diesel-surfactant mix is transferred to the rail car containing the tar. This is followed by the addition of 93% sulfuric acid to the rail car. The contents are allowed to stand in the rail car for 24 hours. During this time, the tar fluidized. This batch is pumped out to the storage tank for recovery of sulfuric acid. To the residue in the rail car, the remaining half of the diesel-surfaceant blend is transferred to the rail car contents followed by more 93% sulfuric acid. The contents in the rail car are allowed to stand for another 24 hours and then pumped to storage. This process completely dissolves/breaks up into pumpable size the tar and allows for the complete removal of the tar from the rail car.

### EXAMPLE 4

A 861845 ℓ (227,700 gallon) storage tank accumulates tars to almost 3.05 m (10 feet) in height on the top of the spent sulfuric acid stored in the tank, over a period of several months. Accordingly, the free acid in the bottom layer is drained from the tank and transferred to another tank for recovery. This results in the tar layer dropping to the bottom of the tank. 93% Sulfuric Acid is introduced into the tank from the top using a centrifugal pump in an amount corrcsponding to 2 parts of 93% Sulfuric Acid for 1 part of tar. Isopropylamine alkyl aryl sulfonate surfactant (RHODACAL LPAM supplied by Rhône-Poulenc Inc.) is introduced into the suction side of the pump and delivered into the tank over the tar-sulfuric acid layer at a ratio of 0.013 parts of Surfactant per 1 part of tar. Recirculation continues for approximately 48 hours during which time the fluidization of the tar is periodically checked by inserting a rod from the top of the tank. When inspection reveals fluidization of the tar, the tank contents are transferred to storage for sulfuric acid recovery. The tank is inspected and found to be clean and free of the tar.

## Claims

1. A process for fluidizing tars/sludges or cleaning tars/sludges from containers/vessels such as transportation containers, reactors, pipes and storage containers comprising contacting the tar/sludge with an inorganic acid and a surfactant having an HLB of at least 10 by the step of
(i) adding the acid and surfactant to the container/vessel containing the tar/sludge;
(ii) or optionally when the tar/sludge has an acid strength of greater than 20%, adding the surfactant without additional acid.

2. Process according to claim 1, wherein said inorganic acid is selected from sulfuric acid, phosphoric acid and mixtures thereof.

3. Process according to claim 2, wherein said inorganic acid is sulfuric acid.

4. Process according to claim 1, wherein said surfactant is selected from nonionic surfactants, cationic surfactants, amphoteric surfactants, anionic surfactants and mixtures thereof.

5. Process according to claim 1, wherein said tar/sludge comprises an acid.

6. Process according to claim 5, wherein said surfactant is selected from nonionic surfactants, cationic surfactants, anionic surfactants and mixtures thereof.

7. Process according to claim 1, wherein said inorganic acid and surfactant are premixed before contact with said tar/sludge.

8. Process according to claim 1, wherein said surfactant is premixed with a carrier before contact with the tar/sludge.

9. A process according to claim 8, wherein said carrier is selected from water, diesel, xylene, methyl isobutyl ketone, isopropyl alcohol, dimethylsulfoxide, sulfuric acid and mixtures thereof.

10. Process according to claim 5, wherein said tar/sludge comprises sulfuric acid.

11. Process according to claim 3, wherein said sulfuric acid concentration is greater than about 75%.

12. Process according to claim 1, further comprising the step of recirculating the fluidized tar/sludge until all of the tar/sludge has been converted to a pumpable media and removing the tar/sludge.

13. Process according to claim 3 or claim 10 further comprising the step of recovery of said sulfuric acid by regeneration.

14. Process according to claim 1, wherein said tar/sludge comprises from 20% to 80% sulfuric acid.

15. Process according to claim 1, further comprising the step of mechanical agitation or external recirculation.

16. Process according to claim 1, comprising the steps of contacting a tar/sludge with acid of 75% to 98% concentration at a temperature of from 16°C to 66°C (60°F to 150°F) and with a surfactant at concentration of from 0.2% to 7.5% by weight of the final blend.

17. Process according to claim 1, wherein said surfactant is selected from mixed octyl/decyl alcohols which are ethoxylated and propoxylated, nonylphenoxy poly(ethyleneoxyl) ethanol, polyethoxylated tallow amine, isopropylaminealkyl sulfonate, dinonylphenoxylpoly (ethyleneoxy) ethanol, mixtures of ethoxylated and propoxylated tallow amine and mixtures thereof.

18. Process according to claim 4, wherein said cationic surfactant is selected from fatty amine ethoxylate surfactants represented by the general average formula: 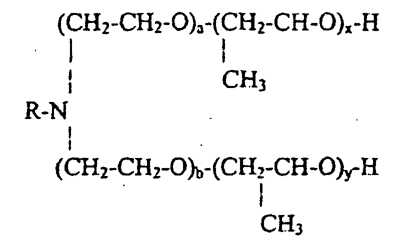 where R represents hydrocarbon groups containing an average value of between 1-30 carbon atoms, and wherein a plus b represent from 0 to 50 moles ethylene oxide (EO), and x and y represent from 0 to 20 moles propylene oxide (PO), the sum of a, b, x, and y being independent and representing average values, the sum of a, b, x, and y being at least 2.

19. Process according to claim 4, wherein said surfactant is selected from:
i) alkali metal alkylbenzene sulphonates, alkyl sulphates, alkyl ether sulphates, alkylaryl ether sulphates, dialkyl sulphosuccinates, alkyl phosphates, and ether phosphates;
ii) aliphatic or aromatic fatty amines, aliphatic fatty amides and quaternary ammonium derivatives;
iii) betaines and their derivatives, sultaines and their derivatives, lecithins, imidazoline derivatives, glycinates and their derivatives, amidopropionates and fatty amine oxides;
iv) alkoxylated fatty acids, polyalkoxylated alkylphenols, polyalkoxylated fatty alcohols, polyalkoxylated or poly glycerolated fatty amides, polyglycerolated alochols and α-diols or ethylene oxide/propylene oxide block copolymers, alkylglucosides, alkylpolyglucosides, sucroethers, sucroesters, sucroglycerides and sorbitan esters; and
v) mixtures thereof.

## Patentansprüche

1. Verfahren zum Fluidisieren von Teeren/Schlämmen oder Reinigen von Teeren/Schlämmen aus Behältern/Gefäßen wie Transportbehältern, Reaktoren, Rohrleitungen und Lagerbehältern, umfassend das Inkontaktbringen des Teers/Schlamms mit einer anorganischen Säure und einem Tensid mit einem HLB-Wert von wenigstens 10, umfassend die folgenden Schritte:
(i) Geben der Säure und des Tensids in den/das Behälter/Gefäß, der/das den Teer/Schlamm enthält;
(ii) oder optional, wenn der Teer/Schlamm eine Säurefestigkeit von mehr als 20 % hat, Zugeben des Tensids ohne zusätzliche Säure.

2. Verfahren nach Anspruch 1, wobei die genannte anorganische Säure ausgewählt wird aus Schwefelsäure, Phosphorsäure und Gemischen davon.

3. Verfahren nach Anspruch 2, wobei die genannte anorganische Säure Schwefelsäure ist.

4. Verfahren nach Anspruch 1, wobei das genannte Tensid ausgewählt wird aus nichtionischen Tensiden, kationischen Tensiden, amphoteren Tensiden, anionischen Tensiden und Gemischen davon.

5. Verfahren nach Anspruch 1, wobei der genannte Teer/Schlamm eine Säure umfasst.

6. Verfahren nach Anspruch 5, wobei das genannte Tensid ausgewählt wird aus nichtionischen Tensiden, kationischen Tensiden, anionischen Tensiden und Gemischen davon.

7. Verfahren nach Anspruch 1, wobei die genannte anorganische Säure und das Tensid vor dem Kontakt mit dem genannten Teer/Schlamm vorvermischt werden.

8. Verfahren nach Anspruch 1, wobei das genannte Tensid vor dem Kontakt mit dem Teer/Schlamm mit einem Träger vorvermischt wird.

9. Verfahren nach Anspruch 8, wobei der genannte Träger ausgewählt wird aus Wasser, Diesel, Xylol, Methylisobutylketon, Isopropylalkohol, Dimethylsulfoxid, Schwefelsäure und Gemischen davon.

10. Verfahren nach Anspruch 5, wobei der genannte Teer/Schlamm Schwefelsäure umfasst.

11. Verfahren nach Anspruch 3, wobei die genannte Schwefelsäurekonzentration höher als etwa 75 % ist.

12. Verfahren nach Anspruch 1, ferner umfassend den Schritt des Rezirkulierens des fluidisierten Teers/Schlamms, bis der gesamte Teer/Schlamm in ein pumpfähiges Medium umgewandelt wurde, und Entfernens des Teers/Schlamms.

13. Verfahren nach Anspruch 3 oder Anspruch 10, ferner umfassend den Schritt der Rückgewinnung der genannten Schwefelsäure durch Regeneration.

14. Verfahren nach Anspruch 1, wobei der genannte Teer/Schlamm zwischen 20 % und 80 % Schwefelsäure umfasst.

15. Verfahren nach Anspruch 1, ferner umfassend den Schritt des mechanischen Rührens oder des externen Rezirkulierens.

16. Verfahren nach Anspruch 1, umfassend die folgenden Schritte: Inkontaktbringen von Teer/Schlamm mit Säure mit einer Konzentration von 75 % bis 98 % bei einer Temperatur zwischen 16°C und 66°C (60°F bis 150°F) und mit einem Tensid mit einer Konzentration von 0,2 bis 7,5 Gew.-% der Endmischung.

17. Verfahren nach Anspruch 1, wobei das genannte Tensid ausgewählt wird aus gemischten Octyl/Decylalkoholen, die ethoxyliert und propoxyliert sind, Nonylphenoxypoly(ethylenoxyl)ethanol, polyethoxyliertem Talgamin, Isopropylaminalkylsulfonat, Dinonylphenoxylpoly(ethylenoxy)ethanol, Gemischen von ethoxyliertem und propoxyliertem Talgamin und Gemischen davon.

18. Verfahren nach Anspruch 4, wobei das genannte kationische Tensid ausgewählt wird aus Fettsäureaminethoxylat-Tensiden, die repräsentiert sind durch die allgemeine Durchschnittsformel: 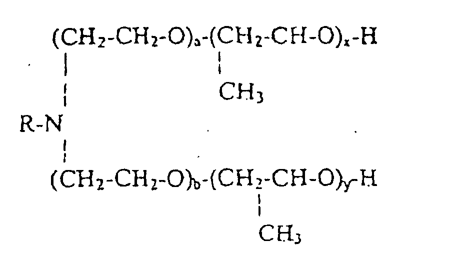 wobei R Kohlenwasserstoffgruppen mit einem Durchschnittswert zwischen 1 und 30 Kohlenstoffatomen repräsentiert, und wobei a plus b zwischen 0 und 50 Mol Ethylenoxid (EO) repräsentiert, und x und y zwischen 0 und 20 Mol Propylenoxid (PO) repräsentieren, wobei die Summe von a, b, x und y unabhängig ist und Durchschnittswerte repräsentiert, wobei die Summe von a, b, x und y wenigstens 2 beträgt.

19. Verfahren nach Anspruch 4, wobei das genannte Tensid ausgewählt wird aus:
i) Alkalimetallalkylbenzolsulfonaten, Alkylsulfaten, Alkylethersulfaten, Alkylarylethersulfaten, Dialkylsulfosuccinaten, Alkylphosphaten und Etherphosphaten;
ii) aliphatischen oder aromatischen Fettsäureaminen, aliphatischen Fettsäureamiden und quartären Ammoniumderivaten;
iii) Betainen und ihren Derivaten, Sultainen und ihren Derivaten, Lecithinen, Imidazolinderivaten, Glycinaten und ihren Derivaten, Amidopropionaten und Fettsäureaminoxiden;
iv) alkoxylierten Fettsäuren, polyalkoxylierten Alkylphenolen, polyalkoxylierten Fettalkoholen, polyalkoxylierten oder polyglycerinierten Fettsäureamiden, polyglycerinierten Alkoholen und α-Diolen oder Ethylenoxid/Propylenoxid-Blockcopolymeren, Alkylglucosiden, Alkylpolyglucosiden, Sucroethern, Sucroestern, Sucroglyceriden und Sorbitanestern; und
v) Gemischen davon.

## Revendications

1. Procédé de fluidification des goudrons/boues ou d'élimination des goudrons/boues des contenants/récipients tels que les contenants de transport, réacteurs, tuyaux et contenants de stockage, comprenant la mise en contact du goudron/boue avec un acide inorganique et un surfactant ayant un rapport hydrophile/lipophile d'au moins 10, par l'opération consistant à
(i) ajouter l'acide et le surfactant dans le contenant/récipient contenant le goudron/boue ;
(ii) ou bien, lorsque le goudron/boue a une force d'acide supérieure à 20%, ajouter le surfactant sans acide supplémentaire.

2. Procédé selon la revendication 1, dans lequel ledit acide inorganique est choisi entre l'acide sulfurique, l'acide phosphorique et des mélanges de ceux-ci.

3. Procédé selon la revendication 2, dans lequel ledit acide inorganique est l'acide sulfurique.

4. Procédé selon la revendication 1, dans lequel ledit surfactant est choisi entre des surfactants non ioniques, des surfactants cationiques, des surfactants amphotères, des surfactants anioniques et des mélanges de ceux-ci.

5. Procédé selon la revendication 1, dans lequel ledit goudron/boue comporte un acide.

6. Procédé selon la revendication 5, dans lequel ledit surfactant est sélectionné entre des surfactant non ioniques, des surfactants cationiques, des surfactants anioniques et des mélanges de ceux-ci.

7. Procédé selon la revendication 1, dans lequel ledit acide inorganique et ledit surfactant sont pré-mélangés avant la mise en contact avec ledit goudron/boue.

8. Procédé selon la revendication 1, dans lequel ledit surfactant est pré-mélangé avec un support avant d'être mis en contact avec le goudron/boue.

9. Procédé selon la revendication 8, dans lequel ledit support est choisi entre l'eau, le gazole, le xylène, l'oxyde de mésityle, l'isopropanol, le diméthylsulfoxyde, l'acide sulfurique, et des mélanges de ceux-ci.

10. Procédé selon la revendication 5, dans lequel ledit goudron/boue comporte de l'acide sulfurique.

11. Procédé selon la revendication 3, dans lequel la concentration dudit acide sulfurique est supérieure à environ 75%.

12. Procédé selon la revendication 1, comprenant en outre l'étape consistant à faire recirculer le goudron/boue fluidifié jusqu'à ce que tout le goudron/boue ait été transformé en un produit pompable, et à enlever le goudron/boue.

13. Procédé selon la revendication 3 ou la revendication 10, comprenant en outre l'étape de récupération dudit acide sulfurique par régénération.

14. Procédé selon la revendication 1, dans lequel ledit goudron/boue comprend de 20% à 80% d'acide sulfurique.

15. Procédé selon la revendication 1, comprenant en outre l'étape d'agitation mécanique ou de recirculation extérieure.

16. Procédé selon la revendication 1, comprenant les étapes consistant à mettre en contact un goudron/boue avec un acide de 75% à 98% de concentration à une température de 16°C à 66°C (60°F à 150°F) et avec un surfactant à une concentration de 0,2% à 7,5% en poids du mélange final.

17. Procédé selon la revendication 1, dans lequel ledit surfactant est sélectionné entre des alcools octyliques/décyliques qui sont éthoxylés et propoxylés, le nonoxynol, l'amine de suif polyéthoxylée, le sulfonate d'isopropylaminealkyle, le dinonylphénoxylpoly(éthylèneoxy)éthanol, des mélanges d'amine de suif éthoxylée et propoxylée et des mélanges de ceux-ci.

18. Procédé selon la revendication 4, dans lequel ledit surfactant cationique est sélectionné entre des surfactants d'éthoxylate d'amines grasses représentés par la formule moyenne générale suivante : 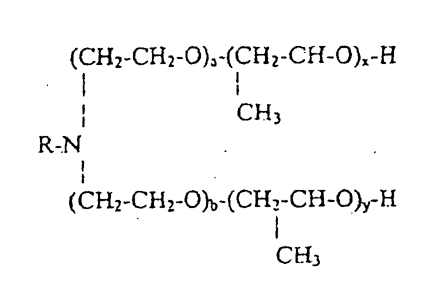 où R représente des groupes hydrocarbures contenant une valeur moyenne de 1 à 30 atomes de carbone, et dans laquelle a plus b représente de 0 à 50 moles d'oxyde d'éthylène et x et y représentent de 0 à 20 moles d'oxyde de propylène, la somme de a, b, x et y étant indépendante et représentant des valeurs moyennes, la somme de a, b, x et y étant d'au moins 2.

19. Procédé selon la revendication 4, dans lequel ledit surfactant est choisi entre :
i) les alkylbenzènesulfonates de métal alcalin, les sulfates d'alkyle, les sulfates d'éther alcoylique, les sulfates d'éther alkylaryliques, les sulfosuccinates dialcoyliques, les phosphates d'alkyle et les phosphates d'éther ;
ii) les amines grasses aliphatiques ou aromatiques, les amides gras aliphatiques et les dérivés d'ammonium quaternaire ;
iii) les bétaïnes et leurs dérivés, les sultaïnes et leurs dérivés, les lécithines, les dérivés de l'imidazoline, les glycinates et leurs dérivés, les amidopropionates et les oxydes d'amines grasses ;
iv) les acides gras alkoxylés, les alkylphénols polyalkoxylés, les alcools gras polyalkoxylés, les amides gras polyalkoxylés ou polyglycérolés, les alcools polyglycérolés et les copolymères d'α-diols ou du bloc oxyde d'éthylène/oxyde de propylène, les alkylglucosides, les alkylpolyglucosides, les sucroéthers, les sucroesters, les sucroglycérides et les esters de sorbitane ; et
v) les mélanges de ceux-ci.
